# EUROPEAN PATENT APPLICATION

(11) **EP 0 999 695 A1**
(43) Date of publication of application: **10.05.2000**
(21) Application number: 99204426.3
(22) Date of filing: 30.06.1995
(51) Int. Cl.: H04N 1/32, H04N 1/00

(54) **Communication method and apparatus**

(62) Divisional of application: 95923469.1
(71) Applicant: Inmarsat Ltd., London EC1Y 1AX (GB)
(72) Inventor: Garstang, Brian, London NW3 (GB); Feldman, Howard Ray, Kenton, Middlesex HA3 8JE (GB)
(74) Representative: Cross, James Peter Archibald

(57) **Abstract**

A broadcast facsimile interface unit (FIU) (4) and broadcast receiving facsimile interface units (FIU) (16a, 16b, 16c) enable facsimile data to be broadcast from a transmitting facsimile terminal (2) via a satellite (10) to more than one receiving facsimile terminals (18a, 18b, 18c) simultaneously. The broadcast FIU (4) simulates a facsimile terminal connected to the transmitting facsimile terminal (2) and sends broadcast signals (8) through a land earth station (6), and the broadcast receiving FIU's (16a, 16b, 16c) receive the broadcast signals (12) and simulate facsimile terminals connected to their respective receiving facsimile terminals (18a, 18b, 18c) according to protocols which enable the receiving terminals to receive the facsimile data successfully.

## Description

### Technical Field

The present invention relates to a facsimile interface apparatus and method for broadcast communication, particularly, but not exclusively via a satellite link.

In a broadcast facsimile communication, a transmitting facsimile terminal transmits facsimile data to more than one receiving facsimile terminals, in contrast to the "one-to-one" mode in which a facsimile terminal sends facsimile data to a single facsimile terminal. Standard facsimile terminals are exclusively designed for "one-to-one" mode.

### Background Art

In one method of facsimile "one-to-many" communication, as described for example in FR-A-90 08169, US-A-5,040,077 and US-A-4,652,934, a calling facsimile terminal stores facsimile data in a memory and successively calls each of the facsimile terminals to which the data are to be sent, so that the communication takes place in serial one-to-one mode.

A known method of facsimile broadcasting uses specially adapted facsimile receivers which receive facsimile data multiplexed with television sound channels, transmitted by satellite from a television audio transmitter. One example of this method is described in the paper "Multi-Address Facsimile System Using Communication Satellite" by Yasumoto et al., IEEE 1990 International Conference on Consumer Electronics, 8 June 1990, Rosemont, Illinois, Pages 308 and 309.

However, the serial one-to-one approach is impractical if a large number of facsimile terminals are to be called, while the above broadcasting method requires dedicated facsimile terminals, which are not suitable for the usual one-to-one mode of communication via a telephone link.

In conventional facsimile terminals designed for one-to-one communication over a telephone link, standard protocols are adopted to allow communication between terminals of different types. Examples of such protocols are those defined by the former International Telegraph and Telephone Consultative Committee (CCITT), now the International Telecommunications Union - Telecommunications Standardization (ITU-T) under recommendations T.3 and T.4 (incorporated herein by reference), known respectively as the Group II and Group III facsimile protocols. Recommendation T.30 (also incorporated herein by reference) defines a common protocol for Group II and III facsimile equipment for communication over a telephone network.

If a one-to-one facsimile communication takes place over a cellular link, an interface is connected between each facsimile terminal and the cellular link and the interface may generate Recommendation T.30 commands to adapt the timing of each facsimile terminal to the cellular link, as disclosed for example in WO-A-92/02100.

However, recommendation T.30 requires the called facsimile terminal to send signals to the calling facsimile terminal, for example to identify the called facsimile terminal, to indicate that it is ready to receive facsimile data and to confirm receipt of control signals. This type of protocol is not designed to be used in facsimile broadcast mode, in which the calling facsimile terminal cannot receive signals from the called facsimile terminals.

The document EP-A-0552367 discloses a facsimile satellite broadcast system using some of the protocol elements of recommendation T.30, but does not describe how these can be adapted to a broadcast system.

### Disclosure of the Invention

According to one aspect of the present invention, there is provided a facsimile interface apparatus for receiving facsimile broadcast information and for performing duplex communication with a receiving facsimile terminal under a protocol supported by the receiving facsimile terminal, which is arranged to receive a broadcast signal, send the broadcast signal to the facsimile terminal, and to repeat the broadcast signal to the facsimile terminal if the facsimile terminal does not respond to the original broadcast signal. An advantage of this function is that it prevents a facsimile broadcast reception from failing as a result of the receiving facsimile terminal not receiving a command correctly.

According to another aspect of the present invention, there is provided a facsimile interface apparatus for performing duplex communication with a facsimile terminal under a protocol supported by the facsimile terminal, and for enabling broadcast transmission of facsimile data from the facsimile terminal, which is arranged to transmit a signal for broadcast in response to a repetition of the signal from the facsimile terminal. An advantage of this function is that broadcast of the signal is delayed to enable receiving facsimile terminals to complete a previous protocol phase.

According to another aspect of the present invention, there is provided a facsimile interface apparatus for performing duplex communication with a facsimile terminal under a protocol supported by the facsimile terminal, and for enabling broadcast transmission of facsimile data from the facsimile terminal, which is arranged to receive a signal from the facsimile terminal and to delay broadcast of the signal until a predetermined interval has elapsed from a previous stage in the protocol.

According to another aspect of the present invention, there is provided a facsimile interface apparatus for receiving facsimile broadcast information and for performing duplex communication with a receiving facsimile terminal under a protocol supported by the receiving facsimile terminal, which is arranged to send a signal to the facsimile terminal to prevent the facsimile terminal from terminating reception when an expected broadcast signal is not received. An advantage of these functions is that the broadcast signal may be delayed to ensure that other receiving facsimile terminals have reached the same stage in the protocol, while preventing the facsimile terminal from disconnecting.

According to another aspect of the present invention, there is provided a facsimile interface apparatus for receiving facsimile broadcast information and for performing duplex communication with a receiving facsimile terminal under a protocol supported by the receiving facsimile terminal, which is arranged to send a default setting signal to the facsimile terminal if a broadcast setting signal is not received by a predetermined stage of the protocol. In this way, variable properties of the facsimile terminal may be set at the required stage of the protocol. Even if certain ones of the broadcast settings do not match the default settings, facsimile reception may still take place.

According to another aspect of the present invention, there is provided a facsimile interface apparatus for performing duplex communication with a facsimile terminal under a protocol supported by the facsimile terminal, and for enabling broadcast transmission of facsimile data from the facsimile terminal, which is arranged to time a predetermined interval after receiving a disconnect command from the facsimile terminal before clearing the broadcast link. An advantage of this function is that broadcast reception may not be interrupted before it is complete.

According to another aspect of the present invention, there is provided a facsimile interface apparatus for receiving facsimile broadcast information and for performing duplex communication with a receiving facsimile terminal under a protocol supported by the receiving facsimile terminal, which is arranged to send an error signal to the facsimile terminal in response to a failure in the communications link. The error signal may include facsimile data for generating an error message at the facsimile terminal. An advantage of this function is that the cause of a reception failure may be determined.

The present invention extends to the methods performed by the facsimile interface apparatus.

The interface apparatus may be adapted for connection to a satellite link or a terrestrial link, such as a cellular GSM radio link.

### Brief Description of the Drawings

Specific embodiments of the present invention will now be described with reference to the accompanying drawings, in which:
Figure 1 is a diagram of a broadcast connection between a transmitting facsimile terminal and a plurality of receiving facsimile terminals via a satellite link;
Figure 2 is a block diagram of the transmitting facsimile terminal, the transmitting facsimile interface unit and the transmitting earth station of Figure 1;
Figure 3 is a block diagram of one of the receiving facsimile terminals, one of the receiving facsimile interface units and one of the receiving earth stations of Figure 1;
Figure 4 is a time chart showing an example of a broadcast communication, according to a protocol, between the transmitting facsimile terminal, the transmitting interface unit, one of the receiving interface units and one of the receiving facsimile terminals;
Figure 5 is a flow chart of the operation of the transmitting facsimile interface unit according to the protocol; and
Figure 6 is a flow chart of the operation of one of the receiving facsimile interface units according to the protocol.

### Modes of Carrying Out the Invention

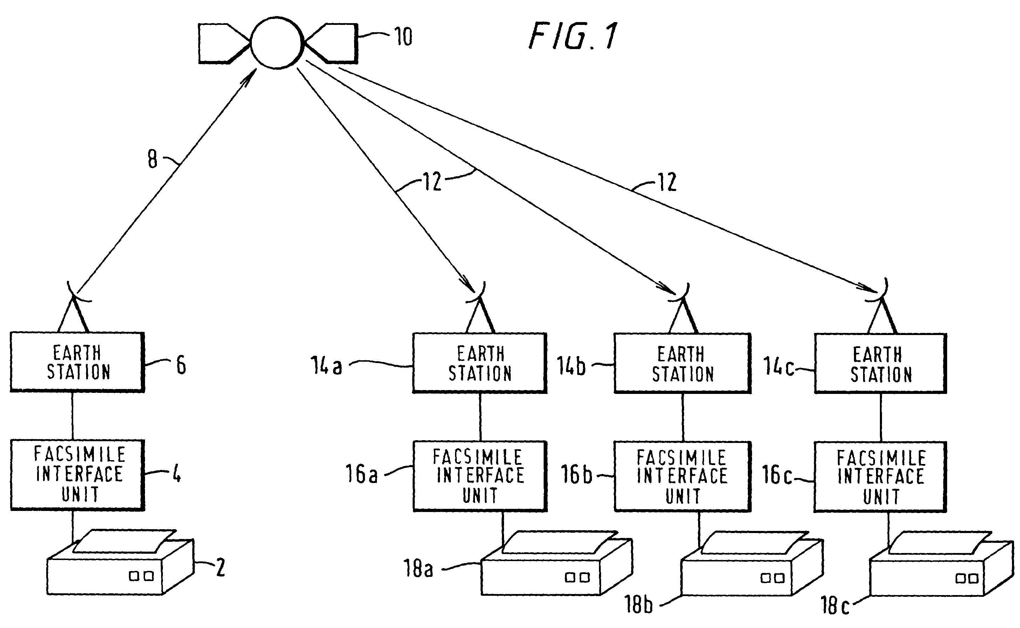

In Figure 1, a transmitting facsimile terminal 2, for example a conventional Group 3 facsimile terminal, is connected to a facsimile interface unit (FIU) 4, which converts analog signals from the transmitting facsimile terminal 2 into digital signals suitable for transmission by an earth station 6 over a digital satellite link. The earth station 6 modulates the digital signals and transmits the modulated radio frequency (RF) signals 8 to a communication satellite 10. The communication satellite 10 retransmits the RF signals 8, preferably at a different frequency to avoid interference, and the retransmitted signals 12 are broadcast so that they may be received by receiving earth stations 14a, 14b, 14c. Each receiving earth station 14 demodulates the signals 12 to produce digital signals which are passed to the corresponding FIU 16a; 16b; 16c. Each receiving FIU 16 converts the digital signals to analog signals and transmits the analog signals to a corresponding receiving facsimile terminal 18a, 18b, 18c. In this way, facsimile messages may be received by any earth station 14 which is in view of the satellite 10. Preferably, the earth stations 6 and 14 are able to transmit as well as receive RF signals, and the FIUs 4 and 16 are also operable in a duplex mode for one-to-one communication, as described for example in the applicant's UK patent application no. 9402501.2.

Alternatively, the FIU 4 may be dedicated to broadcast transmission and the FIU 16 may be dedicated to broadcast reception. Each of the earth stations 6, 14 may be fixed or mobile, but in a preferred arrangement the transmitting earth station 6 is fixed and the earth stations 14 are mobile or temporary installations. Each FIU 4,16 may be integrated with its respective earth station 6,14.

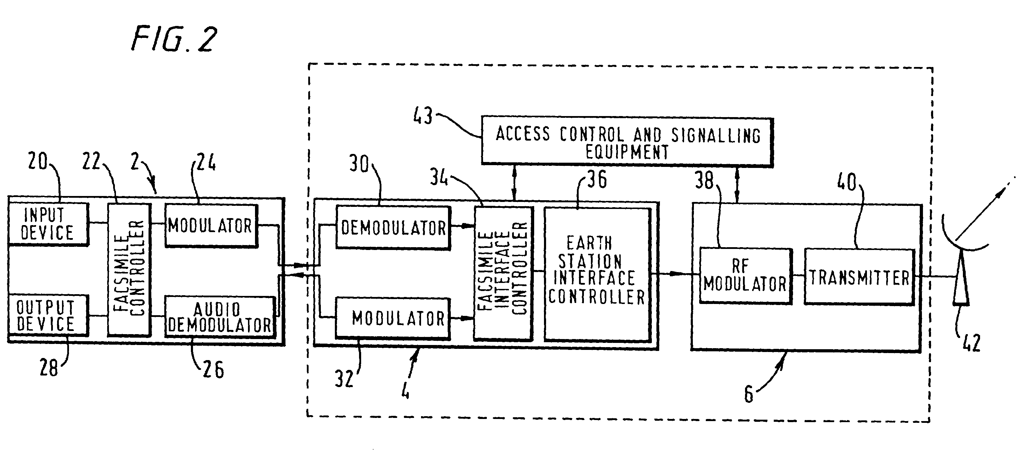

The functional elements of the transmitting terminal 2, the transmitting FIU 4 and the earth station 6 are shown in Figure 2. The facsimile terminal 2 includes an input device 20 (such as a scanner for scanning documents or an input port connected to a computer which generates image data). Image data from the input device 20 is received by a facsimile controller 22, for example a microprocessor, which encodes the facsimile data, for example according to the Huffmann codes defined in ITU-T Recommendation T.4. The facsimile controller 22 also performs call set-up, pre-message procedure, message transmission, post-message procedure and call release, by generating the signals required under recommendation T.30 in conventional fashion. A modulator 24 modulates the signals from the facsimile controller 22 to produce an analog signal suitable for transmission through a telephone link.

The facsimile terminal 2 also includes an audio demodulator 26 which is arranged to receive analog signals from a telephone link and demodulate them to produce digital data, which is supplied to the facsimile controller 22. The digital data may comprise message data or control signals. The facsimile controller 22 decodes facsimile coded signals and controls an output device 28 (such as a printer or an output port to a computer).

The transmitting terminal 2 is connected (either directly or through a public service telephone network (PSTN) or other network) to the FIU 4, which has a demodulator 30 for demodulating analog signals from the facsimile terminal 2 to produce digital signals and a modulator 32 for producing analog signals for transmission to the facsimile terminal 2.

The facsimile interface unit 4 includes a facsimile interface controller 34, for example a microprocessor, which receives signals from the demodulator 30 and sends signals to the modulator 32. The facsimile interface controller 34 is functionally arranged to simulate the operation of a receiving facsimile terminal and to generate the appropriate signals for transmission to the transmitting terminal 2. The facsimile interface controller 34 outputs signals to an earth station interface controller 36 which outputs signals to the earth station 6. Since the earth station 6, when in broadcast mode, sends but does not receive signals over the satellite link, the earth station interface controller 36 provides only a simplex interface to the earth station 6 in this mode.

The signals transmitted by the earth station interface controller 36 are received by a radio frequency (RF) modulator 38 which modulates the signals for transmission by a transmitter 40 coupled to an antenna 42. The antenna 42 may be a directional antenna directed to the satellite 10 through which the broadcast is made.

The initial set-up and the final clearing of a call are controlled by conventional access control and signalling equipment (ACSE) 43 connected to the FIU 4 and earth station 6. As the ACSE is conventional and well known to the skilled reader, and moreover plays no part in the implementation of the T.30 protocol, it will not be described in detail.

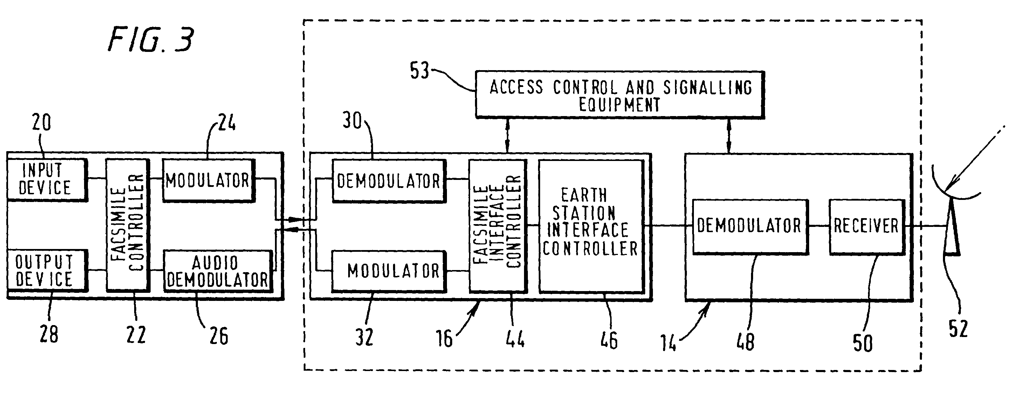

The functional elements of the receiving earth station 14, the receiving FIU 16 and the receiving facsimile terminal 18 are shown in Figure 3. In the receiving earth station 14, a receiver 50 coupled to an antenna 52 receives signals broadcast by the satellite 10, which are demodulated by a demodulator 48 and the digital signals are passed to the receiving FIU 16, in which the signals are input to a receiving earth station interface controller 46. The receiving earth station interface controller 46 operates in a simplex receive-only mode, and supplies signals to a receiving facsimile interface controller 44.

The receiving facsimile interface controller 44 simulates the operation of a transmitting facsimile terminal and exchanges signals with the receiving facsimile terminal 18 by means of a modulator 30 and demodulator 32, similar or identical to those present in the transmitting FIU 4. The functional features of the receiving facsimile terminal 18 are similar to those of the transmitting facsimile terminal 2 and their description will not be repeated.

The receiving earth station 14 and FIU 16 are controlled by ACSE 53, which performs those functions specific to the satellite link but does not play a part in implementing the T.30 protocol.

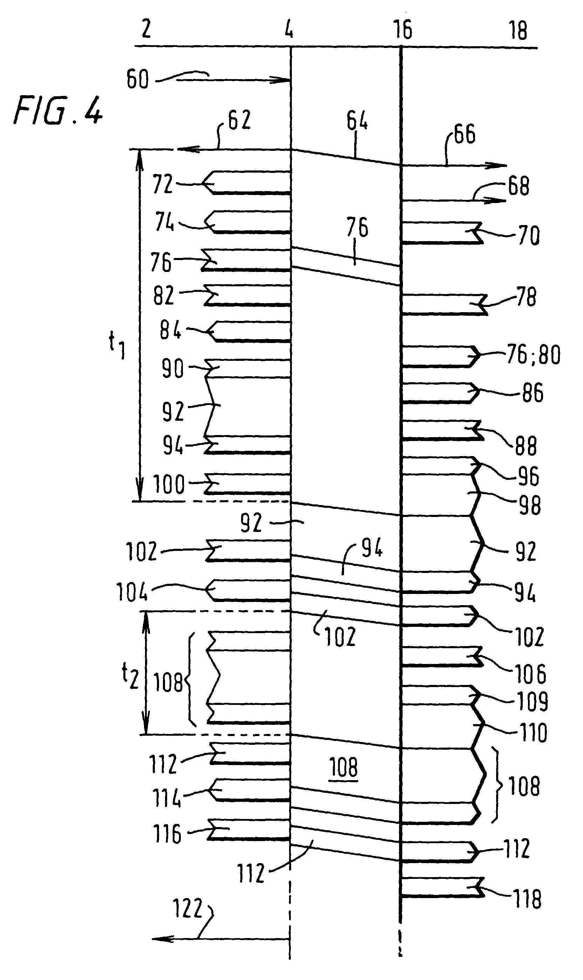

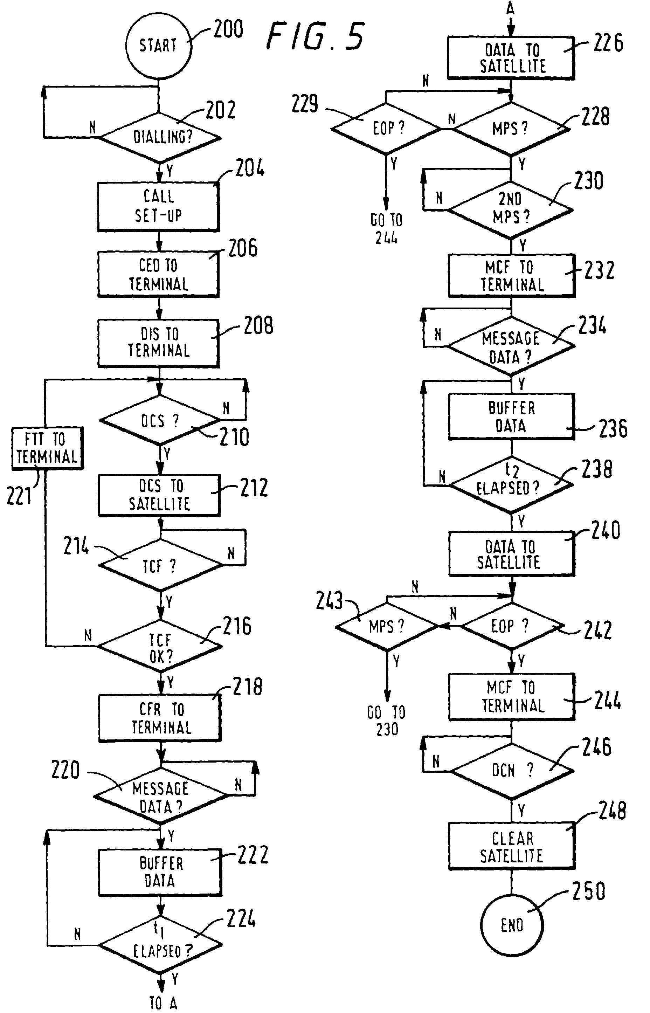

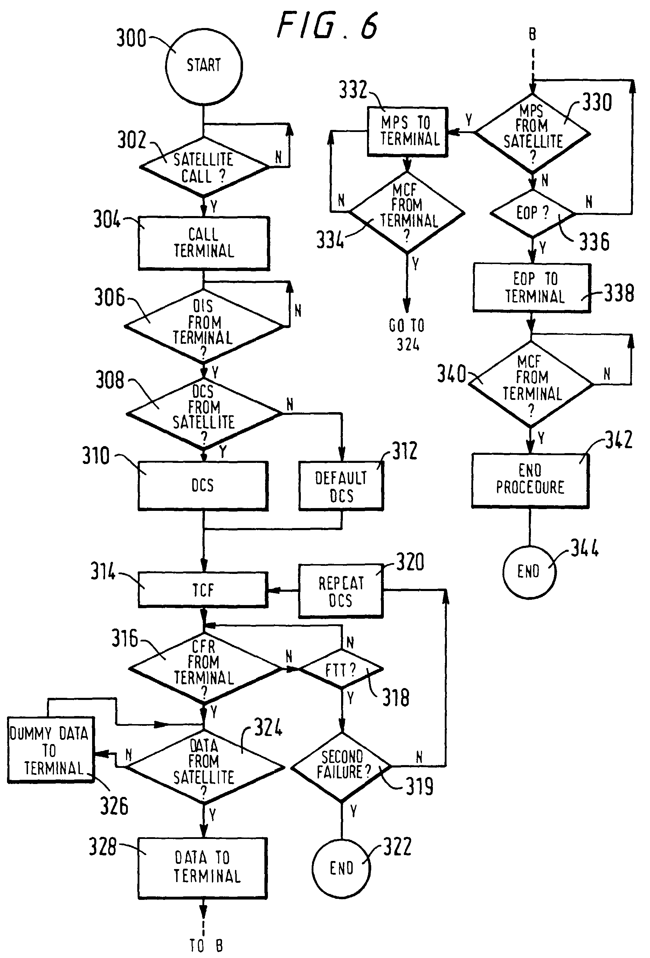

A protocol for a broadcast transmission, in which the T.30 protocol is observed both at the transmitting facsimile terminal 2 and the receiving facsimile terminal 18, is shown by the time chart of Figure 4, in which the connection between the transmitting facsimile terminal 2 and the receiving facsimile terminal 18 is shown in the horizontal direction, while time progresses vertically downwards. The operation of the transmitting FIU 4 is shown in the flowchart of Figure 5 and that of the receiving FIU 16 is shown in the flowchart of Figure 6.

Initially, the receiving FIU 16 is in an "idle" mode (step 302) in which it is ready to receive a facsimile broadcast.

At the beginning of a broadcast transmission, the transmitting facsimile terminal dials a number, as shown by reference 60, which is received by the transmitting earth station interface controller 36 (step 202) and is passed to the ACSE (step 204) to set up a satellite channel. When the transmitting facsimile interface controller 34 detects from the ACSE that a channel is set up, it sends an answering signal 62 to the transmitting facsimile terminal 2. At the same time, the transmitting FIU 4 sends a calling signal 64 across the satellite link to the receiving FIU 16, which is received by the receiving facsimile interface controller 44 (step 302) which sends a ringing signal 66, followed by a calling signal 68 to the receiving facsimile terminal 18 (step 304). In response to the calling signal 68, the receiving terminal 18 sends a CED (called station identification) signal 70 (a 2100 Hz tone), which indicates that the called terminal is a facsimile terminal. The CED signal is ignored by the receiving FIU 16.

However, according to recommendation T.30, the transmitting facsimile terminal 2 will expect to receive a CED tone to indicate that a connection to a facsimile terminal has been made. The transmitting FIU 4 generates a CED signal 72 (step 206) a predetermined period after the transmitting FIU 4 receives a signal from the ACSE to indicate connection to the telephone circuit. In an example, the predetermined interval is 2.5s +/- 1%, and the duration of the CED signal 72 is 3s +/- 1%. The CED signal 72 is received by the transmitting facsimile terminal 2 and the facsimile controller 22 proceeds to the next stage of transmission.

The transmitting FIU 4 then transmits (step 208) a digital identification signal (DIS) 74, which is used in the T.30 protocol to identify the standard capabilities of the called apparatus. In a preferred example, the DIS comprises a facsimile information field (FIF) with the following bits set to "1":
10 (T.4 receiver)
20 (unlimited recording length)
24 (extended field enabled)
32 (extended field enabled).

All other bits in the FIF are set to "0".

Since bits 11 and 12 are set to zero, the DIS 74 indicates that only the lowest data rate of 2400 bit/s (V.27 ter fallback mode) is to be supported in accordance with T.30 Table 2. This arrangement is suitable for communication systems in which only the lowest facsimile data rate is supported, such as INMARSAT-M (TM).

The transmitting facsimile terminal 2 responds to this by transmitting a digital command signal (DCS) 76, which is intended to set up the standard capabilities identified by the DIS in the called terminal. The DCS is passed to the earth station interface controller 36 and is transmitted over the satellite link (steps 210, 212).

In the example shown, the receiving facsimile terminal 18 has not yet transmitted a DIS 78 by the time that the DCS 76 has been received by the receiving FIU 16. The DCS is therefore buffered by the receiving facsimile interface controller 44. If any further DCSs are received over the satellite channel, for example because the transmitting FIU 4 fails to train after receiving the first DCS 76, the further DCS replaces the DCS in the buffer. When a DIS 78 is received (step 306) from the receiving facsimile terminal 18, the receiving FIU 16 transmits the buffered DCS to the receiving facsimile terminal 18 (step 310).

However, if the receiving terminal 18 has generated a DIS 78 before the receiving FIU 16 has received a DCS over the satellite link, there is a danger that the receiving terminal 18 will time out and end the call, because no DCS 76 has been received within a predetermined period of the receiving terminal 18 sending the DIS 78. To prevent this occurring, the receiving FIU 16 generates a default DCS 80 and sends it to the receiving terminal 18 (step 312) if no DCS 76 has been received over the satellite link a short period after the receiving FIU 16 has received a DIS 78 from the receiving terminal 78. If the DCS 76 is received by the receiving FIU 16 after the default DCS 80 is sent to the receiving terminal 18, the DCS 76 is discarded and is not sent to the receiving terminal 18.

In a preferred example, the default DCS 80 comprises a facsimile interface field (FIF) with the following bits set to "1":
10 (T.4 receiver),
20 (unlimited recording length),
24 (extended field enabled),
32 (extended field enabled).

All other bits in the FIF must be set to zero, including bit 23 (40 milliseconds minimum scanline). Preferably, the receiving FIU 16 begins to send the preamble preceding the DCS 150 ms +/- 10 ms from the time at which the last bits of the last flag following the DIS 78 from the receiving terminal 18 were demodulated.

After the transmitting terminal 2 has transmitted the DCS 76, it sends a TCF (training check) signal 82, which is used to check whether the receiving facsimile is receiving correctly at the selected data rate. The transmitting FIU 4 responds to the TCF signal (step 214) with a CFR signal 84 (confirmation to receive) (step 218), or alternatively an FTT (failure to train) signal (step 221) if the TCF signal 82 is not acceptable in quality (step 216). The TCF signal 82 is not transmitted over the satellite link by the transmitting FIU 4. In this example, shown in Figure 4, training is successful and the transmitting FIU 4 responds with the CFR signal 84.

If the transmitting FIU 4 fails to train, the transmitting terminal 2 repeats the DCS 76 and the TCF signal 82 (steps 210 and 214), and the transmitting FIU 4 sends the repeated DCS 76 over the satellite channel. After a predetermined number of failed training attempts, the transmitting terminal 2 will send a DCN (disconnect) signal and disconnect the line.

Any repeated DCS, received over the satellite channel after the DCS 76 or the default DCS 80 is sent to the receiving terminal 18, is discarded by the receiving FIU 16.

At the receiving side of the broadcast link, the receiving FIU 16 generates independently a TCF signal 86 (step 314), preferably 100 ms +/- 10 ms after the preceding DCS 76;80 has been sent to the receiving terminal 18. Preferably, the message portion of the TCF signal 86 generated by the receiving FIU 16 consists of 1500 ms +/- 10 ms of binary "0" bits.

In the example shown in Figure 4, the receiving terminal 18 responds with a CFR signal 88, which is intercepted by the receiving FIU 16 (step 316). However, if the receiving terminal 18 does not receive the TCF signal with sufficient quality, it will send an FTT signal to the receiving FIU 16 (step 318). In that case, the receiving FIU 16 retransmits the DCS signal 76;80 (step 320) followed by the TCF signal (step 314). If the receiving signal still does not transmit a CFR signal (step 319), the receiving FIU 16 terminates the procedure (step 322).

After the transmitting FIU 4 has sent the CFR signal 84, it waits (step 220) to receive facsimile message data from the transmitting terminal 2. When the message data is received, in the format of a training portion 90, a data portion 92, and an RTC (check) portion 94, the transmitting FIU 4 does not immediately broadcast the facsimile message data over the satellite link, because some of the receiving facsimile terminals 18 may not yet be ready to receive the facsimile data. Therefore, the transmitting FIU 4 stores the first page of message data in a buffer (step 222), which may be positioned at any suitable point in the data path through the FIU 4, until a timer in the earth station interface controller 36 has determined that a time t₁ has elapsed sufficient for all of the receiving facsimile terminals 18 to become ready to receive (step 224). In one example, t₁ is at least 40 seconds +/- 250 ms, measured from the calling signal 64 being sent. Once the required time t₁ has elapsed, the transmitting FIU 4 begins to send the facsimile message data 92 and the RTC 94 in the buffer to the earth station 6 for broadcasting over the satellite link (step 226). The buffer continues to buffer data received from the transmitting terminal 2.

Although the delay incurred by the transmitting FIU 4 ensures that even the slowest receiving terminals 18 should be ready to receive message data, some of the receiving terminals 18 will be ready considerably before this stage and, if no message data is received within a predetermined period from the receiving facsimile terminal 18 sending the CFR signal 88, the receiving terminal 18 will time out and end the call. In order to overcome this problem, the receiving FIU 16 begins to generate (step 326) a header portion 96 and dummy facsimile data 98 if no message data is received over the satellite link within a predetermined period of time, preferably 200 ms +/- 10 ms after the last bit of the preceding CFR signal 88 has been demodulated. The dummy message data consists of a repeated line of facsimile data formatted according to CCITT recommendation T.4, for example:
the Huffmann make-up code for white run length 1728;
the Huffmann terminating code for white run length 0;
3000 "0" bits; and
an EOL (end of line) code.
This sequence is repeated until the message data 92 is received on the satellite channel, whereupon the message data 92 is sent to the receiving terminal 18 (step 328).

If the facsimile data 92 to be transmitted consists of more than one page of data, the transmitting terminal 2 transmits an MPS (multi-page signal) after the first page has been sent. According to recommendation T.30, the next page of facsimile data is sent soon after an MCF (message confirmed) signal is received by the transmitting terminal.

However, in the case of broadcast transmission, it is advantageous to delay the transmission of subsequent pages by the transmitting terminal 2 to ensure that all the receiving facsimile terminals 18 are ready to receive the next page and to reduce the amount of message data buffered by the transmitting FIU 4. To this end, the transmitting FIU 4 ignores the first MPS 100 sent by the transmitting terminal 2 (step 228). When the transmitting terminal 2 does not receive a response to the MPS 100 within a predetermined period, it sends a second MPS 102 and the transmitting FIU 4 then responds with an MCF signal 104 (step 232) and sends the MPS signal 102 over the satellite channel for reception by the receiving FIU 16 (step 330), where it is passed to the receiving terminal 18.

The receiving facsimile terminal 18 then responds by sending an MCF signal 106 to the receiving FIU 16. However, if no MCF signal 106 is received by the receiving FIU 16 in response to the first MPS transmitted over the satellite channel, the receiving FIU 16 sends a second MPS to the receiving terminal 18. This is often necessary, because many conventional facsimile terminals activate a paper cutter after each page is printed, and do not receive any signals during this time to avoid interference from the paper cutter. Thus, the first MPS 102 may not be detected by the receiving facsimile terminal 18. The need to send a second MPS to the receiving terminal 18 increases the delay before the receiving terminal 18 is ready to receive, so there is a particular need to delay the transmitting terminal 2 as described above.

However, if an EOP (end of procedure) signal is received (step 229), the transmitting FIU 4 follows an end-of-message procedure as described below (step 244).

After the transmitting facsimile terminal 2 has received the MCF signal 104 from the transmitting FIU 4, it begins to transmit the next page of facsimile data 108 (step 234). However, this page of facsimile data 108 is also buffered in the FIU 4 (step 236) until a predetermined delay t₂ has elapsed (step 238) since the last signal (in this case an MPS signal) was sent over the satellite channel. Preferably, the delay t₂ is at least 11.5s + /- 250 ms. As before, this delay helps to ensure that all the receiving facsimile terminals 18 are ready to receive the next page of data. It is possible, however, that the buffer has not been completely cleared of the first page of message data 92. Preferably, therefore, the buffer is sufficiently large to accommodate several pages or part pages of message data. In one example, the buffer size is 30 kbytes, which typically allows a 20 page facsimile to be sent with the required delays.

The receiving FIU 16 again generates a header portion 109 and dummy message data 110 (step 326) if no data is received over the satellite channel within a predetermined period of the MCF signal 106 being sent by the receiving terminal 18.

If no more message data is to be sent, the transmitting terminal 2 generates an EOP (end of procedure) signal 112 which is buffered by the transmitting FIU 4 until the last page of facsimile data has been sent (step 240, 242). The transmitting FIU 4 then enters the end-of-message procedure. However, if a further page is to be sent, the transmitting terminal 2 sends an MPS signal (step 243) and the transmitting FIU responds to the MPS signal as described above (step 230).

In the end-of-message procedure, the transmitting FIU 4 sends an MCF signal 114 (step 244) to the transmitting terminal 2 in order to comply with recommendation T.30. The transmitting terminal 2 responds by sending a DCN (disconnect) signal 116 to the transmitting FIU 4, and the transmitting terminal 2 then disconnects itself. However, the transmitting FIU 4 does not attempt to signal to the ACSE to clear the satellite channel (at reference 122) until each of the receiving terminals 18 can be expected to have received the last page of data 108. The earth station interface controller 36 includes a timer which times the interval from the last signal being sent over the satellite channel, in order to calculate when the satellite channel may be cleared.

The EOP signal 112 is sent over the satellite channel (step 245) after the facsimile data 108. The receiving FIU 16 receives the EOP signal 112 and passes it to the receiving terminal 18 (steps 336,338). An MCF signal is transmitted by the receiving terminal 18 (step 340). The receiving FIU 16 then completes the end-of-message procedure (step 342).

An aim of the operation of the transmitting FIU 4 and receiving FIU 16, as described above, is to maintain the T.30 protocol at both the transmitting and receiving end of the broadcast link. However, if the satellite channel clears unexpectedly during transmission, the receiving FIU 16 may generate an error message formatted as message data and send the error message for display at the receiving terminal 18. The error message identifies the type of error encountered and optionally the transmitting earth station 6 to which the receiving terminal 18 was previously connected.

If the receiving FIU 16 receives a CRP (command repeat) signal from the receiving terminal 18, the receiving FIU) 16 may repeat the previous command to the receiving terminal 18.

If the receiving FIU 16 begins to receive the message data 92,108 over the satellite channel before the receiving facsimile terminal 18 is ready to receive it, the receiving FIU 16 may clear the call. Alternatively, the receiving earth station interface controller 46 may include an input buffer for buffering the message data 92,108 until the receiving terminal 18 is ready to receive message data.

If the receiving FIU 16 detects that the satellite channel connection has been cleared during a period in which no message data is being transmitted, the receiving FIU 16 sends a DCN signal to the receiving facsimile terminal 18 at the next suitable point in the protocol, so as to disconnect the receiving terminal 18. Optionally, the receiving FIU 16 may enter the message phase of the protocol by generating suitable T.30 commands and send an error message to the receiving terminal 18 before the DCN signal.

If the receiving FIU 16 receives the DCS 76 over the satellite channel, but the DCS 76 contains errors, the receiving FIU 16 may generate the default DCS 80 as if no DCS had been received over the satellite channel.

If a corrupted binary coded signal (BCS), which cannot be identified, is received over the satellite channel, and facsimile message data was received immediately previously, the receiving FIU 16 automatically sends an MPS signal to the receiving terminal 18. If, however, message data was not immediately previously received, then the receiving FIU 16 generates the default DCS signal 80 and sends this to the receiving terminal 18.

If the transmitting facsimile interface unit 4 receives a command from the transmitting terminal 2 which is not recognised, the transmitting FIU 4 sends a CRP command to the transmitting terminal 2 so that the command is repeated.

The demodulator 30 and modulator 32 are provided in the FIUs 4,16 since facsimile terminals which are currently available have only an analog interface for use with existing telephone lines. However, if facsimile terminals having a direct digital output were to be used, or if the functions of the input device 20, output device 28 and fax controller 22 are integrated in a computer having a digital interface, the demodulator 30 and modulator 32 could be omitted and the facsimile interface unit 4 could be provided with a digital interface.

Optionally, the transmitting FIU 4 logs details of each broadcast transmission, so that the operation of the transmitting FIU 4 may be monitored and adjusted if necessary.

Although the above embodiment has been discussed with reference to the T.30 protocol, the present invention is not restricted to any particular protocol but the principles of operation of the transmitting FIU 4 and receiving FIU 16 may be adapted to other protocols, whether for facsimile or other image broadcast transmission.

Furthermore, the present invention is applicable to broadcast either by satellite or terrestrial links, and may in particular be applied to terrestrial mobile communications such as GSM.

## Claims

1. Facsimile interface apparatus for connection between facsimile apparatus and a communications link, comprising:
a first interface adapted for connection to the communications link and operable in a receive-only mode, comprising means for receiving a communications link signal from the communications link; and
a second interface adapted for connection to the facsimile apparatus and operable in a concurrent receive and transmit mode when said first interface is in said receive-only mode, comprising means for transmitting a communication signal derived from the communications link signal to the facsimile apparatus, means for receiving a facsimile signal from the facsimile apparatus, and means for transmitting a response signal to the facsimile apparatus in response to the facsimile signal; wherein the second interface is adapted to repeat the communication signal if no facsimile signal in response to the communication signal is received from the facsimile apparatus within a predetermined period.

2. Apparatus as claimed in claim 1, wherein the communication signal indicates the end of a page of facsimile data.

3. Facsimile interface apparatus for connection between facsimile apparatus and a communications link, comprising:
a first interface adapted for connection to the communications link and operable in a receive-only mode, comprising means for receiving a communications link signal from the communications link; and
a second interface adapted for connection to the facsimile apparatus and operable in a concurrent receive and transmit mode when said first interface is in said receive-only mode, comprising means for transmitting a communication signal derived from the communications link signal to the facsimile apparatus, means for receiving a facsimile signal from the facsimile apparatus, and means for transmitting a response signal to the facsimile apparatus in response to the facsimile signal; wherein the second interface is arranged to generate a holding signal if the communications link signal is not received within a predetermined period.

4. Apparatus as claimed in claim 3, wherein the holding signal comprises dummy message data.

5. Apparatus as claimed in claim 3 or 4, including a timer responsive to receipt of the facsimile signal, wherein the means for generating a holding signal is arranged to send the holding signal to the facsimile apparatus after a delay determined by the timer.

6. Apparatus as claimed in claim 5, wherein the facsimile signal indicates that the facsimile apparatus is ready to receive facsimile message data.

7. Facsimile interface apparatus for connection between facsimile apparatus and a communications link, comprising:
a first interface adapted for connection to the communications link and operable in a receive-only mode, comprising means for receiving a communications link signal from the communications link; and
a second interface adapted for connection to the facsimile apparatus and operable in a concurrent receive and transmit mode when said first interface is in said receive-only mode, comprising means for transmitting a communication signal derived from the communications link signal to the facsimile apparatus, means for receiving a facsimile signal from the facsimile apparatus, and means for transmitting a response signal to the facsimile apparatus in response to the facsimile signal; wherein the second interface is arranged to generate an error signal in response to a failure in the communications link.

8. Apparatus as claimed in claim 7, wherein the error signal comprises facsimile message data.

9. Facsimile interface apparatus for connection between facsimile apparatus and a communications link, comprising:
a first interface adapted for connection to the communications link and operable in a receive-only mode, comprising means for receiving a communications link signal from the communications link; and
a second interface adapted for connection to the facsimile apparatus and operable in a concurrent receive and transmit mode when said first interface is in said receive-only mode, comprising means for transmitting a communication signal derived from the communications link signal to the facsimile apparatus, means for receiving a facsimile signal from the facsimile apparatus, and means for transmitting a response signal to the facsimile apparatus in response to the facsimile signal; wherein the communication link signal indicates one or more properties of a remote facsimile apparatus connected to the communications link, and the second interface is arranged to generate a default signal indicating a corresponding one or more default properties if the communications link signal is not received within a predetermined period.

10. Apparatus as claimed in claim 9, wherein said one or more default properties includes a facsimile data rate setting.

11. Apparatus as claimed in claim 9 or 10, wherein said one or more default properties includes an image resolution setting.

12. A facsimile interface apparatus for connection between a facsimile apparatus and a communications link, comprising:
a first interface adapted for connection to the communications link and operable in a transmit-only mode, comprising means for transmitting a communications link signal to the communications link; and
a second interface adapted for connection to the facsimile apparatus and operable in a concurrent receive and transmit mode when said first interface is in said receive only mode, comprising means for receiving a facsimile signal from the facsimile apparatus and means for transmitting a response signal to the facsimile apparatus in response to said facsimile signal; wherein the first interface is adapted to transmit the communications link signal in response to a repetition of the facsimile signal from the facsimile apparatus.

13. Apparatus as claimed in claim 12, wherein the facsimile signal and the communications link signal indicate the end of a page of facsimile data.

14. A facsimile interface apparatus for connection between a facsimile apparatus and a communications link, comprising:
a first interface adapted for connection to the communications link and operable in a transmit-only mode, comprising means for transmitting a communications link signal to the communications link; and
a second interface adapted for connection to the facsimile apparatus and operable in a concurrent receive and transmit mode when said first interface is in said receive only mode, comprising means for receiving a facsimile signal from the facsimile apparatus and means for transmitting a response signal to the facsimile apparatus in response to said facsimile signal; wherein the first interface is arranged to transmit the communications link signal after a predetermined delay has elapsed from an event in a current facsimile call.

15. Apparatus as claimed in claim 14, wherein the communications link signal includes facsimile message data derived from said facsimile signal.

16. A facsimile interface apparatus for connection between a facsimile apparatus and a communications link, comprising:
a first interface adapted for connection to the communications link and operable in a transmit-only mode, comprising means for transmitting a communications link signal to the communications link; and
a second interface adapted for connection to the facsimile apparatus and operable in a concurrent receive and transmit mode when said first interface is in said receive only mode, comprising means for receiving a facsimile signal from the facsimile apparatus and means for transmitting a response signal to the facsimile apparatus in response to said facsimile signal; the apparatus further comprising a timer responsive to receipt of said facsimile signal, and means adapted to generate a clearing signal for clearing the communications link after a delay determined by the timer.

17. Apparatus as claimed in claim 16, wherein said facsimile signal is a disconnect command.

18. Apparatus as claimed in any preceding claim wherein the communications link includes a satellite link.

19. A satellite earth station including apparatus as claimed in claim 18.

20. A method of operating facsimile interface apparatus, said apparatus comprising a first interface connected to a communications link in a receive-only mode and a second interface connected to a facsimile apparatus in a concurrent receive and transmit mode, said method comprising:
receiving a communications link signal from the communications link;
transmitting a communication signal, derived from the communications link signal, to the facsimile apparatus;
detecting whether a facsimile signal in response to the communication signal is received from the facsimile apparatus within a predetermined period, and, if not, repeating the transmission of the communication signal.

21. A method as claimed in claim 20, wherein the communication signal indicates the end of a page of facsimile data.

22. A method of operating facsimile interface apparatus, said apparatus comprising a first interface connected to a communications link in a receive-only mode and a second interface connected to a facsimile apparatus in a concurrent receive and transmit mode, said method comprising:
detecting whether a communications link signal is received from the communications link within a predetermined period, and, if not, transmitting a holding signal to the facsimile apparatus.

23. A method as claimed in claim 22, wherein the holding signal comprises dummy message data.

24. A method as claimed in claim 22 or claim 23, including receiving a facsimile signal from the facsimile apparatus, and timing said predetermined period from receipt of said facsimile signal.

25. A method as claimed in claim 24, wherein the facsimile signal indicates that the facsimile apparatus is ready to receive facsimile message data.

26. A method of operating facsimile interface apparatus, said apparatus comprising a first interface connected to a communications link in a receive-only mode and a second interface connected to a facsimile apparatus in a concurrent receive and transmit mode, said method comprising:
detecting a failure condition of the communications link, and sending an error signal to the facsimile apparatus in response to said detection.

27. A method as claimed in claim 26, wherein the error signal comprises facsimile message data.

28. A method of operating facsimile interface apparatus, said apparatus comprising a first interface connected to a communications link in a receive-only mode and a second interface connected to a facsimile apparatus in a concurrent receive and transmit mode, said method comprising:
detecting whether a communications link signal, which indicates one or more properties of a remote facsimile apparatus connected to the communications link, is received from the communications link, and, if not, transmitting a default signal, which indicates a corresponding one or more default properties, to the facsimile apparatus.

29. A method as claimed in claim 28, wherein said one or more default properties includes a facsimile data rate setting.

30. A method as claimed in claim 28 or 29, wherein said one or more default properties includes an image resolution setting.

31. A method of operating facsimile interface apparatus, said apparatus comprising a first interface connected to a communications link in a transmit-only mode and a second interface connected to a facsimile apparatus in a concurrent receive and transmit mode, said method comprising:
receiving a facsimile signal from the facsimile apparatus;
receiving a repetition of the facsimile signal from the facsimile apparatus; and
in response to said repetition, transmitting a communications link signal to the communications link.

32. A method as claimed in claim 31, wherein the facsimile signal and the communications link signal indicate the end of a page of facsimile data.

33. A method of operating facsimile interface apparatus, said apparatus comprising a first interface connected to a communications link in a transmit-only mode and a second interface connected to a facsimile apparatus in a concurrent receive and transmit mode, said method comprising:
receiving a facsimile signal from the facsimile apparatus;
timing an interval from an event in a current facsimile call; and
transmitting a communications link signal derived from said facsimile signal to the communications link after the interval has elapsed.

34. A method as claimed in claim 33, wherein the communications link signal includes facsimile message data received from said facsimile apparatus.

35. A method of operating facsimile interface apparatus, said apparatus comprising a first interface connected to a communications link in a transmit-only mode and a second interface connected to a facsimile apparatus in a concurrent receive and transmit mode, said method comprising:
timing a predetermined interval after the receipt of a signal from the facsimile apparatus; and
clearing the communications link after said predetermined interval has elapsed.

36. A method as claimed in claim 35, wherein the signal is a disconnect command.
